# EUROPEAN PATENT APPLICATION

(11) **EP 2 127 959 A1**
(43) Date of publication of application: **02.12.2009**
(21) Application number: 08382021.7
(22) Date of filing: 30.05.2008
(51) Int. Cl.: B60R 21/215, B60R 21/205

(54) **Airbag cover**

(71) Applicant: Dalphi Metal España, S.A., 28006 Madrid (ES)
(72) Inventor: Lois Martínez, Carlos, 36213, Vigo, Pontevedra (ES)
(74) Representative: Elzaburu Marquez, Alberto

(57) **Abstract**

Airbag cover (1) for vehicles which comprises split lines by means of which the aforementioned cover (1) splits and the body of the airbag emerges in the event of collision of the vehicle, with said cover (1) having an essentially constant thickness (11), with said split lines being formed by paths (9) of an adequate thickness (11) similar to the thickness (11) of the cover (1), in order to permit splitting of said cover (1) in the zone corresponding to those paths (9), with the remainder of the cover (1) being stiffened in all those zones (10) where there are no paths (9) forming the split lines, in such a way that fracture paths (9) are created which ensure the initiation and subsequent propagation of the splitting of the cover (1) by means of fracture mechanics on releasing the body of the airbag, with the thickness (11) of the cover (1) having no section reductions so that intense narrowing of the external surface of the cover (1) is not caused.

## Description

### SCOPE OF THE INVENTION

The present invention refers to a cover for an airbag module and specifically for an airbag module for vehicles.

### BACKGROUND TO THE INVENTION

Airbag covers are known in the state of the art having an upper surface which includes predefined split lines with a much lower thickness than the thickness of the cover. These split lines facilitate the emergence of the airbag when it needs to be deployed in protecting an occupant of a vehicle in the event of a collision.

The aforementioned split lines situated on the covers of an airbag module cause problems in the injection process during manufacture of the cover due to section reductions in the passage of material. In fact, the requisite narrowing which the cover needs in order for it to split open so that the airbag can be deployed is a design parameter which produces a negative effect on the cover manufacture, with many rejects due to the appearance of the covers. In addition, if the split line is not made very fine in order to create a good external aspect of the cover there may be serious difficulties in splitting the cover.

One of the design solutions used at present consists of increasing the thickness of the cover split lines which, in many cases, raises the problem of causing splits in other areas of the cover with components projecting, since if the splitting is delayed or does not split correctly along the split line, the energy of the body of the airbag module is not dissipated during its deployment. Through the energy conservation equation the system attempts to self adjust which it does by transferring said energy in the form of loads, requests or pressures on other areas of the airbag module cover, which are not designed to support such loads. For this reason there are splits and projections in these zones.

Another problem raised on this point is the fact that there is no best practice, since the geometry and style which make a split line adequate for one product also make it inapplicable for a different product.

Thus, the manufacturing processes of covers with split lines of a thickness lower than those currently used pose the following problems; it is very complicated to measure in a piece or to adjust in the mould; the processes involved are very expensive due to the high rate of rejects; the parameters need to be amended and adjusted until the injection process of the cover is optimised and this often entails the fact that noise (changes in batches of material, mould temperatures, extraction time etc) causes the cover's appearance to deteriorate over time; furthermore the process is sensitive to the type of material used and therefore at times it is decided to change the material, as the appearance of the cover is unacceptable, which frequently causes problems in the product. As result, since the cover obtained cannot be improved by means of the process or the design, the rate of rejected parts per million manufactured is very high, thus raising production costs.

One of the solutions known and employed currently consists of reinforcing the covers of the airbag modules with various types of nerve. The problem with such solutions is that the thickness of the split lines continues to be very low, which makes the style surfaces, which are those seen by the vehicle occupant, of poor quality and in addition the manufacturing processes are very complicated. Furthermore, these solutions continue to pose the problem of splitting and sinking in the area of the split lines due to their low thickness.

The present invention is designed to resolve the foregoing disadvantages.

### SUMMARY OF THE INVENTION

The present invention thus develops an airbag cover for a vehicle which includes a plurality of split lines on its internal face with said split lines consisting of weakened zones which predetermine the lines where the splitting of the cover will occur during deployment of the body of the airbag. These split lines comprise fracture paths of an essentially constant thickness which are equal or similar to the thickness of the cover in its remaining areas, with the aforementioned cover stiffened in all those areas other than the zones comprising the split lines where the cover is not required to split.

Therefore, the aim of the present invention is to provide a cover for an airbag module with split lines configured on the interior surface of said cover in such a way that the splitting of the lines is designed by means of fracture mechanics thus improving the ease of the process, while controlling the propagation of splitting of the cover. Since the thickness of the split lines is equal or similar to the thickness of the cover, the manufacturing process is considerably simplified, avoiding problems with sinking or splitting, while the visible style surface is of excellent quality.

Other characteristics and advantages of the present invention will be noted from the following detailed description, describing some embodiments which are illustrative of its subject, with relation to the drawings attached hereto.

### DESCRIPTION OF THE DRAWINGS

Figure 1 shows the interior of an airbag cover according to a present solution known in the prior art, indicating the split line of said cover.
Figures 2a and 2b show a detailed transversal section of the split lines of an airbag cover according to the known prior art.
Figure 3 shows a ground view detail of the hinge required to ensure that the flaps fold in a predefined zone in an airbag cover according to the known prior art.
Figure 4 shows a cross section diagram of the design with airbag cover split lines according to the known prior art.
Figure 5 shows a cross section diagram of the design of the split lines of airbag covers according to the present invention.
Figure 6 shows a front view diagram of the split line of the stiffened zones of the airbag covers pursuant to the present invention.

### DETAILED DESCRIPTION OF THE INVENTION

Cover 1 of an airbag module is normally made from a plastic material, preferably with a thermoplastic elastomer. These materials may be easily processed and permit the appropriate dimension and quality controls of the parts made with these materials.

### Description of the present solution

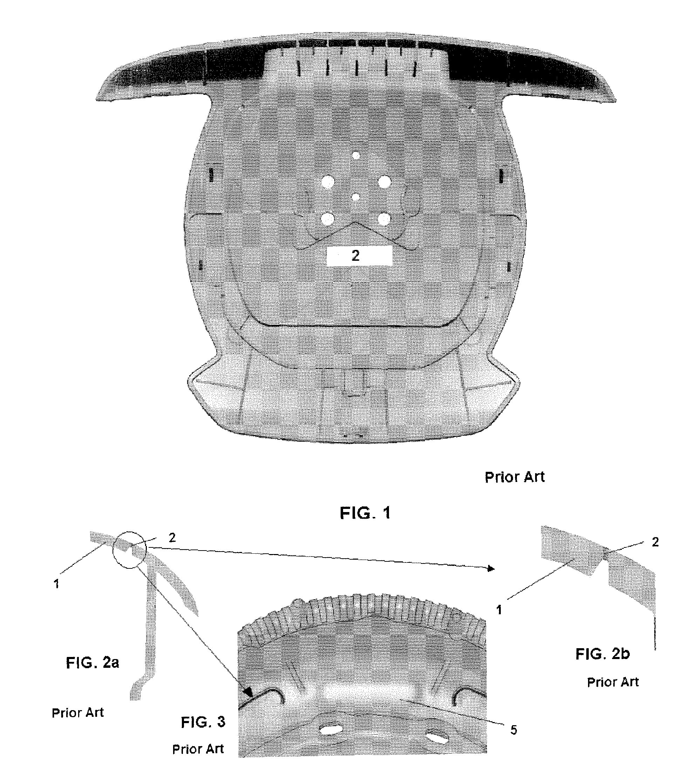

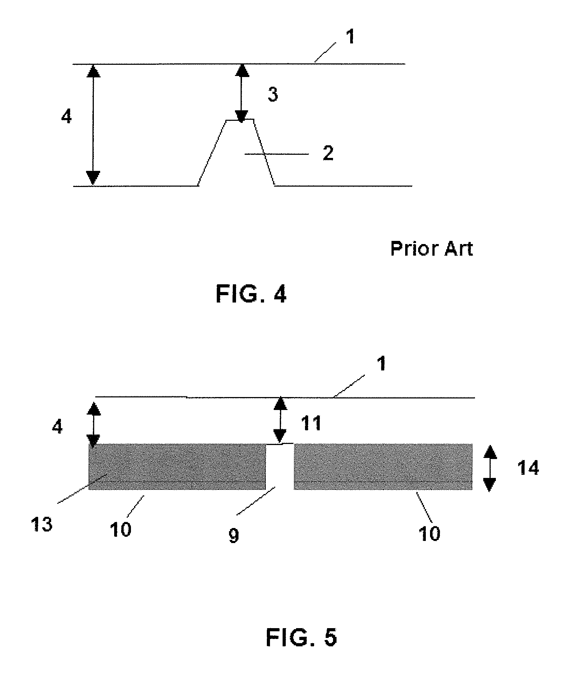

In order to facilitate the splitting of covers 1 of Figures 2a, 2b and 4 of the airbag modules and thus the emergence of the body of the airbag when the bag is deployed to protect an occupant of a vehicle in the event of collision, the surface of said covers 1 comprises split lines 2 as may be seen in Figures 2a, 2 b and 4 with the thickness 3 of said split lines 2 being much lower than the thickness 4 of the whole cover 1, as is indicated in Figure 4.

Thus, the traditional split lines 2, according to the prior art, and as may be seen in Figures 2a, 2 b and 4 comprise weakened zones in the surface of the cover 1 which predetermine the lines where the splitting of the upper surface of said cover 1 should occur during the deployment of the airbag bag. The surface of the cover 1 also comprises hinges 5, as shown in Figure 3, with the thickness of these hinges 5 being somewhat less than the thickness 4 of the cover 1, so that these hinges 5 comprise the folding areas of the cover when the bag is deployed in the event of vehicle collision.

Therefore, as may be seen in Figures 2a, 2b, and 4 the design concept of the prior art is based on causing splitting of cover 1 in weakened areas of the of the cover where the split lines are found 2, whereas the thickness 4 of the cover 1 of the airbag is constant with a typical value of between 2mm and 3 mm , thickness 3 of the split lines 2 is variable, with a typical value being between 0.3 mm in the zones where splitting starts up to 0.8 mm. As a result, the break lines 2 comprise areas with drastic reduction of thickness 4 of the cover 1. Furthermore, the design parameters of the break line 2 are based on the angle of the line, the width of the base and the height of said line, as well as the radii in the break line zone and on the material to be injected.

Designs for covers 1 for airbag modules are known which are provided with split lines 2 of a thickness 3 much lower than the thickness of the cover 1 which is usually constant, as may be seen from Figure 4, with these lines being invisible to the vehicle occupant. Said covers 1 also include hinges 5.

### Description of the invention

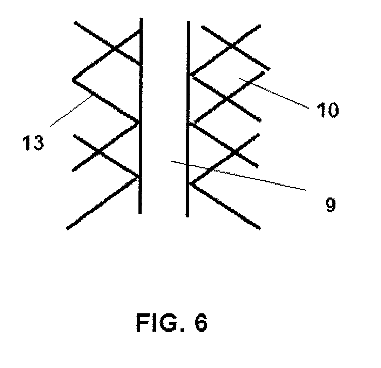

In our invention the aim is to resolve the problems described in the foregoing paragraphs. For this purpose we designed a cover 1 Figure 5, which consists entirely of a surface with a fine section 11 (Figure 5) the whole of which is provided in its interior with stiffened zones 10 (Figures 5 and 6) specially designed to provide consistency and rigidity to the aforementioned cover 1.

Said stiffened zones 10 (Figures 5 and 6) are placed throughout the cover 1 interior except where we wish the split to occur (ie in zone 9 of Figures 5 and 6) Said split lines in the internal part of the cover 1 surface are based on fracture mechanics in such a way that said split lines form a path or track 9 for the propagation of the fracture. In addition, all the zones 10 where fractures are not required are stiffened. The aforementioned fracture path or track 9 is of an essentially constant thickness 11 throughout the cover 1 of the airbag. Typically, the thicknesses 11 Figure 5 are similar to the thickness 4 (Figure 4) in the present solution. The cover 1 thus comprises stiffened zones 10, Figures 5 and 6, where the cover 1 is not required to split. These zones 10 may be stiffened in various ways. Preferably they will be stiffened by means of nerves 13, which may be seen in Figures 5 and 6. Furthermore these nerves 13 may be parameterised with one of the preferable options being to use nerves 13 of the honeycomb type. The height 14 of the reinforcing nerves 13 of the zones 10 is variable, according to mechanical requirements.

In addition, the aforementioned split lines comprising paths or tracks 9 may be provided with changes in thickness being specifically fine in order to facilitate initiation of splitting of the cover 1 (not shown).

Thus, the main design advantages of the cover 1 according to the present invention are as follows:
- the cover 1 has a thickness 14 which is essentially constant, and therefore it improves the flow of material in the injection process on the surfaces of the mould which form the essentially constant surface without section reductions which do not cause intense narrowing in said external surface of the part, as it is the nerves 10 which have a variable thickness based on the mechanical requirements of the cover 1 which is being designed;
- a fracture path 9 is generated which guarantees the start and subsequent production of a split in the cover 1, thus releasing the body of the airbag;
- the nerves 13, for example of a honeycomb type, assist in providing rigidity to the cover 1 required for pressing the horn for example, while at the same time serving as stress catalyst towards the fracture path 9;
- modification of the height 14 parameter of the nerves 13 is a low cost construction which is simple to modify in respect of the present solution;
- the design of the cover 1 according to the invention may be simulated in full on CAE or computer assisted simulation, which enables the behaviour and stresses in the fracture path 9 to be easily predicted and defined;
- the design of the cover 1 according to the invention reduces the weight and, as a result the cost of raw material in the injection process of said cover 1.

Although an embodiment of the invention has been designed and represented, it is clear that modifications may be introduced within the scope of the invention which should not be deemed to be restricted to his embodiment but rather to the content of the following claims.

## Claims

1. Airbag cover (1) for vehicles comprising split lines through which the split of said cover (1) occurs and the body of the airbag emerges in the event of collision of the vehicle, with said cover (1) having an essentially constant thickness (11) **characterised in that** said split lines are formed by paths (9) of an adequate thickness (11) similar to the thickness (11) of the cover (1) in order to permit the splitting of said cover (1) in the zone corresponding to said paths (9), with the rest of the cover (1) being stiffened in all those zones (10) where there are no paths (9) comprising split lines, in such a way that split lines (9) are generated through which the start and subsequent splitting of the cover (1) is ensured by means of fracture mechanics, on releasing the body of the airbag, with the thickness (11) of the cover (1) not including section reductions, in such a way that intense narrowing of the external surface of the cover (1) does not occur.

2. Airbag cover (1) for an automobile vehicle according to claim 1 **characterised in that** the zones (10) are stiffened by means of nerves (13).

3. Airbag cover (1) for vehicles according to claim 2 **characterised in that** the nerves (13) of the zones (10) are of the honeycomb type.

4. Airbag cover (1) for vehicles according to claims 2-3 **characterised in that** the nerves (13) have a variable height (14).

5. Airbag cover (1) for vehicles according to any of the previous claims **characterised in that** the paths (9) comprise specific changes in thickness in order to facilitate initiation of splitting of the cover (1).

6. Airbag cover (1) for vehicles according to any of the previous claims, **characterised in that** the cover (1) is made from plastic material.

7. Airbag cover (1) for vehicles according to claim 6 **characterised in that** the cover (1) is made from thermoplastic elastomer.
